# EUROPÄISCHE PATENTANMELDUNG

(11) **EP 0 874 321 A2**
(43) Veröffentlichungstag der Anmeldung: **28.10.1998**
(21) Anmeldenummer: 98106856.2
(22) Anmeldetag: 15.04.1998
(51) Int. Cl.: G06F 17/30

(54) **Relationales Speicher- und Datenverarbeitungssystem**

(30) Priorität: 24.04.1997 DE 19717268
(71) Anmelder: Casa Gesellschaft für Informationstechnik mbH, 10178 Berlin (DE)
(72) Erfinder:
(74) Vertreter: Breymann, Dieter

(57) **Zusammenfassung**

Die vorliegende Erfindung lehrt ein Computersystem mit mindestens einem Speicher, der zumindest teilweise nach Art eines semantischen Netzes organisiert ist, mit Datenobjekten (**1, 7-10, 12, 18, 19, 15**) und Relationen (**3-6, 11, 13, 20, 21**) wobei das System erfindungsgemäß dadurch gekennzeichnet ist, daß Speicherplatz für Relationen, welche Relationen-Relationen (**14, 16, 24**) genannt werden, vorgesehen ist, wobei je Relationen-Relationen (**14, 16, 24**) mindestens jeweils die Information explizit oder auch implizit vorhanden ist, welche angibt zwischen welchem jeweiligen Datenobjekt und welcher jeweiligen Relation, oder zwischen welcher jeweiligen Relation und welcher weiteren jeweiligen Relation die Relationen-Relation besteht, wobei auch Relationen-Relationen zwischen Relationen-Relationen bzw. zwischen Relationen-Relationen und Datenobjekten bestehen können und darüberhinaus Verfahren zur Ausführung auf einem solchem System wie desweiteren vorteilhafte Verwendungen eines ebnsolchem.

## Beschreibung

Die vorliegende Erfindung betrifft ein relationales Speicher- und Datenverarbeitungssystem für semantische Netze.

Die relationale Speicherung von Daten und deren Verarbeitung spielen in den Applikationen der künstlichen Intelligenz insbesondere in Form sogenannter semantischer Netze eine bedeutende Rolle.

Semantische Netze ermöglichen es Datenobjekte im Hinblick auf spezielle Anwendungen in einem Speicher, dessen technischer Aufbau entsprechend der Struktur solcher semantischer Netze gewählt ist, so zu speichern, daß ihre Abspeicherung, ihr Abruf und ihre Verarbeitung besonders vorteilhaft im Hinblick auf die technischen Verfahren der künstlichen Intelligenz sind.

Der nach der Struktur eines sematischen Netzes aufgebaute Speicher ermöglicht es dabei die jeweilig zu speichernden Daten und auch ihre Beziehungen untereinander (Relationen) unmittelbar zu hinterlegen.

Semantische Netze und ihr Aufbau sind bereits seit langem bekannt. So beschreibt WINSTON (Winston, Patrick Henry, Artifical Intelligence, 1984, S. 253) etwa den Aufbau eines semantischen Netzes mit Objekten und Relationen zwischen den Objekten, also Paaren von Objekten.

Seither wurden derartige Netze in einer Vielzahl von Anwendungen und Erfindungen benutzt. Auch wurden eine Reihe besonders vorteilhafter Verfahren entwickelt, die es erlauben, die in sematischen Netzspeichern hinterlegten Daten auf neuartige Weise besonders effizient und vorteilhaft zu verwalten und zu verarbeiten.

Insbesondere eignen sich Standardalgorithmen zur Bearbeitung von Graphen, als allgemeinere Repräsentation von Netzstrukturen auch gut zur Verarbeitung semantischer Netze. So ist etwa ein Tiefensucheverfahren (depth-first-search) für Graphen, wie sie auch semantische Netze darstellen aus SEDGEWICK (Sedgewick, Robert, Algorithms, Reading, Mass. 1988, 423-427, 472-475) bekannt.

Es beschäftigt sich aber auch die US 4 815 005 beispielsweise mit dem Problem, besonders schnelle Verfahren und Vorrichtungen zur Informationsrückgewinnung aus semantischen Netzen mittels Inferenzmechanismen für Datenbanksysteme der künstlichen Intelligenz anzugeben.

Die US 5 473 732 betrifft hingegen ein Verfahren zur Wissensaquisition von Fakten aus der realen Welt zur Darstellung in den Objekten und Relationen eines semantischen Netzwerkes.

Diese Methoden und Systeme stehen hier nur exemplarisch für den Stand der Technik. Sie beschäftigen sich mit der Aquirierung und geeigneten Hinterlegung von Wissen in dem jeweiligen sematischen Netz oder aber mit seiner Rückgewinnung für die jeweilige Aufgabe. Der strukturelle Aufbau eines semantischen Netzes und damit auch eines Speichers der dieses Netz jeweilig technisch verkörpert wird im Stand der Technik nicht in Frage gestellt, obschon in dieser Struktur und dem dieser Struktur folgenden Speicheraufbau erhebliche Nachteile begründet liegen.

In der künstlichen Intelligenz ist es ebenfalls seit langem bekannt, daß für einen guten Problemlösungsansatz gerade auf eine geeignete Repräsentation der relevanten Daten ankommt. Hierin liegt ein Schlüssel für einen erfolgversprechenden Problemlösungsansatz. D.h.für den Datenspeicher, daß dieser seiner Struktur nach der für die zu lösende Aufgabe relevanten Repräsentation der Daten folgen soll.

Insbesondere sollte die Datenrepräsentation und damit auch der strukturelle Aufbau des zu ihrer technischen Realisierung verwendeten Speichers auch den folgenden Bedingungen genügen (vgl. WINSTON, ebd., S. 24):
- Die Speicherstruktur sollte die effektive Speicherung und Rückgewinnung der darin hinterlegten Informationen unterstützen.
- Die Speicherstruktur sollte mittels zur Verfügung stehender Verfahren bearbeitbar sein.
- Die Speicherstruktur sollte die problemrelevanten Informationen deutlich machen.
- Die Speicherstruktur sollte in dem Sinne vollständig sein, als daß sie es ermöglicht alle problemrelevanten Informationen zu hinterlegen.
- Die Speicherstruktur sollte kompakt sein, d.h. daß die Informationen möglichst effizient in ihr hinterlegt werden können.

Gerade unter diesen Gesichtspunkten ergeben sich jedoch besondere Probleme mit herkömmlichen aus dem Stand der Technik bekannten sematischen Netzen und Speichern, die diese Netzstrukturen technisch realisieren.

So neigen sematische Netzstrukturen zu einer Aufblähung hinsichtlich ihrer Größe, wenn alle problemrelevanten Datenobjekte und ihre jeweiligen Beziehungen untereinander vollständig für das jeweilige abzubildende Modell hinterlegt werden sollen.

Eine solche Aufblähung geschieht insbesondere dann, wenn es gilt Beziehungen einzelner Datenobjekte zu anderen Datenobjekten abzuspeichern, diese Beziehungen jedoch unter der Kondition des Vorhandenseins anderer Beziehungen stehen. Derartige Beziehungen lassen sich allein durch Relationen zwischen Datenobjekten, wie sie in semantischen Netzen nach dem Stand der Technik vorgesehen sind nicht modellieren.

Jedoch kann dies in semantischen Netzen herkömmlicher Art dadurch gelöst werden, daß die Datenobjekte, die Beziehungen zu anderen Datenobjekten aufweisen, welche unter der Kondition einer solchen Abhängigkeit stehen, künstlich mittels einer Relation nach der Art "*besteht aus*" auf eine Anzahl von Unterobjekten verweisen, die eine Zerlegung des ursprünglichen Objekts darstellen, wobei die Anzahl der Unterobjekte der Zahl der bereits erwähnten konditionalen Abhängigkeiten entspricht und dann die einzelnen Unterobjekte jeweils nur die Relationen aufweisen, die unter der dem Unterobjekt entsprechenden Kondition erlaubt sind.

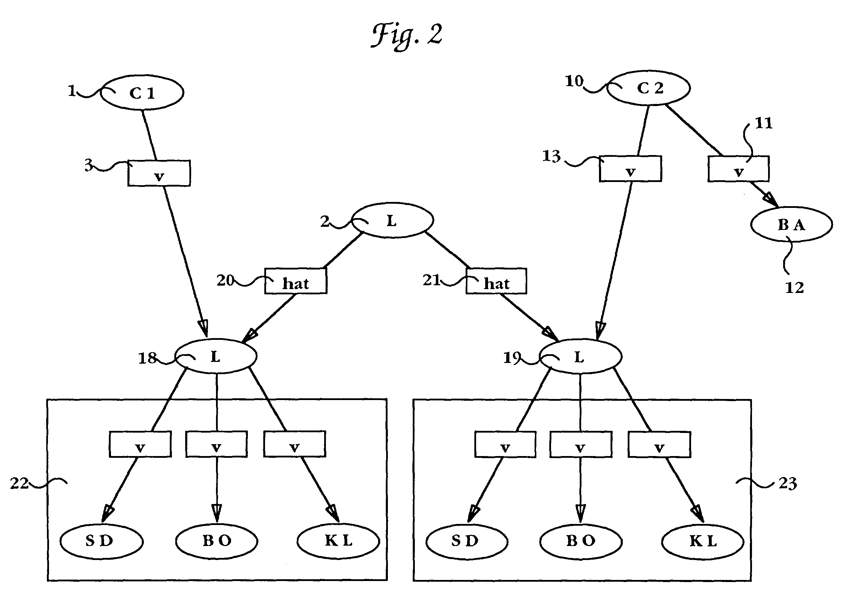

Zur Verdeutlichung dieser abstrakten Problematik sei ein Beispiel angeführt: Es ist ein Teil eines eines Raketensystems gegeben, worin ein erstes Computersystem enthalten ist, welches im Normalbetrieb des Raketensystems bestimmte Funktionen erfüllt und sich hierbei eines Lagekontrollsystems bedient. Das Lagekontrollsystem weist weitere Subsysteme, die zu seiner Funktion erforderlich sind wie etwa Steuerdüsen oder Boosterstufen auf. Desweiteren existiert ein zweites Computersystem, welches nicht-kritische Aufgaben des Raketensystems, etwa eine wünschenswerte, aber nicht zwingend notwendige Bildauswertung übernimmt. Im dem Notfalle, daß das erste Computersystem ausfällt, springt das zweite Computersystem, welches im Normalbetrieb nur unkritische Aufgaben wahrnimmt als Reservesystem für das erste Computersystem ein und übernimmt dessen Aufgaben. Somit übernimmt es dann auch die Ansteuerung des Lagekontrollsystems. Will man die in diesem Sachverhalt enthaltenen Informationen in einem Speicher hinterlegen, der seiner Struktur nach einem herkömmlichen semantischen Netz entspricht, so muß man das Lagekontrollsystem künstlich aufteilen, indem man ein Lagekontrollsystem für den Normalbetrieb und eines für den Notbetrieb als Datenobjekt speichert und eine Relation vom ersten Computersystem auf das Lagekontrollsystem für Normalbetrieb und eine weitere Relation vom zweiten Computersystem auf das Lagekontrollsystem für Notbetrieb im Speicher vermerkt, obgleich es sich um dasselbe Lagekontrollsystem handelt. Diese künstliche Aufteilung ist erforderlich um in dem nach den Strukturen eines herkömmlichen semantischen Netzes aufgebauten Speicher alle relevanten Informationen, insbesondere die Information darüber in welcher Phase, nämlich Normalbetrieb oder Notbetrieb, welches Computersystem, nämlich das erste oder das zweite das Lagekontrollsystem ansteuert. Es ist also notwendig das Lagekontrollsystem in zwei Untersysteme für jede relevante Phase aufzuteilen und zu diesem Zwecke zu duplizieren. Ebenso müssen natürlich auch die vom Lagekontrollsystem verwendeten Subsysteme auch je einmal für beide künstlich geschaffenen Lagekontrollsysteme abgespeichert werden, somit auch deren evtl. Sub-Subsysteme und so fort. Dies führt zu einer enormen Speicherplatzaufblähung schon in einfachen Fällen, was in der Praxis zur Folge hat, das derartige Verhältnisse, zumindest was komplexere Systemstrukturen anbelangt nicht mehr implementierbar sind. Dies gilt nicht nur im Hinblick auf den Speicherplatzbedarf, sondern auch im Hinblick auf die Erstellung, Pflege und Überblickbarkeit des im Einzelfall konkret verwendeten Datenmodells. Betreffend weitere Details dieses Beispiels sei auf die Figurenbeschreibung zu Fig. 2 verwiesen.

Auf der anderen Seite besteht, wie an dem oben angeführten Beispiel klar wird jedoch durchaus ein Wunsch zur Modellierung derartiger real vorhandener Systeme in Speichern von Rechnersytemen. Insbesondere gilt dies im Hinblick auf die Funktionsmodellierung komplexer technischer Systeme, aber auch etwa für die technische Modellierung von Geschäftsprozessen. Darüberhinaus stellen semantische Netze, und somit auch ihre technische Realisierung in einem entsprechend organisierten Speicher, wie die Erfahrung gezeigt hat, grundsätzlich der Richtung nach einen richtigen und effektiven Ansatz zur informationstechnischen Modellierung und Beschreibung real vorhandener komplexer Systeme.

Daher ist es Aufgabe der vorliegenden Erfindung Speichervorrichtungen anzugeben, die die ihrem Aubau nach der Grundstruktur bekannter semantischer Netze folgen, diese strukturell jedoch so erweitern, daß es möglich ist, Beziehungen einzelner Datenobjekte zu anderen Datenobjekten abzuspeichern, wobei diese Beziehungen unter der Kondition des Vorhandenseins anderer Beziehungen stehen können, ohne daß es zu einer unvertretbaren Aufblähung der Anzahl der erforderlichen Datenobjekte und damit auch des Speicherbedarfs kommt und hierfür geeignete Verfahren zu ihrer Verarbeitung in diesem Speicher anzugeben.

Dies wird erfindungsgemäß gelöst durch ein Computersystem mit mindestens einem Speicher, der zumindest teilweise nach Art eines semantischen Netzes organisiert ist, wobei er Speicherplätze aufweist für Datenobjekte, und für Relationen, wobei je Relation mindestens jeweils die Information explizit oder auch implizit vorhanden ist, welche angibt, zwischen welchen jeweiligen Datenobjekten die Relation besteht, und das Computersystem erfindungsgemäß dadurch gekennzeichnet ist, daß desweiteren Speicherplatz für weitere Relationen, welche Relationen-Relationen genannt werden, vorgesehen ist, wobei je Relationen-Relationen mindestens jeweils die Information explizit oder auch implizit vorhanden ist, welche angibt zwischen welchem jeweiligen Datenobjekt und welcher jeweiligen Relation, oder zwischen welcher jeweiligen Relation und welcher weiteren jeweiligen Relation die Relationen-Relation besteht, wobei auch Relationen-Relationen zwischen Relationen-Relationen bzw. zwischen Relationen-Relationen und Datenobjekten bestehen können.

Hieran wird deutlich, daß Relationen-Relationen im Sinne der vorliegenden Erfindung nur ein Spezialfall von Relationen sind, die jedoch die Ausdrucksmöglichkeiten semantischer Netzspeichermodelle entscheidend verbesssern.

Vorzugsweise kann je Relation oder Relationen-Relationen auch jeweils die Information explizit oder auch implizit vorhanden sein, die angibt, in welche Richtung die jeweilige Relation oder Relation-Relation besteht.

Je gerichteter Relation oder gerichteter Relationen-Relation kann dabei auch jeweils die Information explizit oder auch implizit vorhanden sein, die angibt, ob die jeweilige Relation oder Relation-Relation eine dominante oder eine inverse Relation bzw. Relationen-Relation ist.

Deweiteren dient zur Lösung der Aufgabe der Erfindung ein Verfahren zur Durchführung auf einem wie vorstehend beschriebenen Computersystem zur Ermittlung der mit einem Datenobjekt direkt und indirekt verbundenen Relationen und Datenobjekten, wobei das zu durchsuchende semantische Netzwerk ausgehend von einem Start-Datenobjekt entsprechend einer rekursiven Tiefensuche (depth-first-search-Verfahren) entlang der, während der Durchführung des Verfahrens aufgefunden Relationen durchsucht wird und die hierbei rekursiv aufgefundenen Relationen und Datenobjekte im Speicher in einer Ergebnisdatenstruktur, vorzugsweise einer Liste festgehalten werden, das erfindungsgemäß dadurch gekennzeichnet ist, daß auch entlang der in dem Netz aufgefundenen Relationen-Relationen rekursiv weitergesucht wird.

Vorzugsweise ist das Verfahren dabei erfindungsgemäß dadurch gekennzeichnet, daß während der Tiefensuche in dem sematischen Netzwerk eine Suchrestriktion vorgesehen ist, die entsprechend einer gewählten Strategie eine Einschränkung des Suchraumes vornimmt

Dabei kann die Suchrestriktion so ausgestaltet sein, daß Relationen die von Relationen ausgehen nicht weiter in der Tiefensuche verfolgt werden.

In einer bevorzugten Ausführungsform ist das erfindungsgemäße Verfahren dadurch gekennzeichnet, daß die Suchrestriktion zusätzlich so ausgestaltet ist, daß nicht über aufgefundene Datenobjekte in die Tiefe hinweggesucht wird.

Vorzugsweise ist das Computersystem nach der vorliegenden Erfindung erfindungsgemäß dadurch gekennzeichnet, daß je Datenobjekt auch jeweils eine Hierarchienformation explizit oder auch implizit vorhanden ist, welche angibt, auf welcher Position der Hierarchieebene das Datenobjekt in einer Datenobjekthierarchie steht.

Dabei kann das erfindungsgemäße Verfahren zur Durchführung auf einem wie zuletzt vorstehend beschriebenen Computersystem dadurch gekennzeichnet sein, daß die Suchrestriktion zusätzlich so ausgestaltet ist, daß Datenobjekte ab bestimmten, vor Start der Suche festgelegter Positionen in der Datenobjekthierarchie inklusive aller hiermit verbundenen Relationen nicht mit in die Suche einbezogen werden.

Es kann ebenfalls erfindungsgemäß dadurch gekennzeichnet sein, daß die während der Suche ermittelten Datenobjekte dahingehend restringiert werden, daß nur Datenobjekte ab einer bestimmten vor Start der Suche festgelegten Position in der Datenobjekthierarchie als Bestandteil des Ergebnisses der Suche berücksichtigt werden.

Beispielhaft sei im folgenden ein bevorzugtes Ausführungsbeispiel des vorstehenden Verfahrens nach der vorliegenden Erfindung, notiert in Pseudocodedarstellung angegeben:

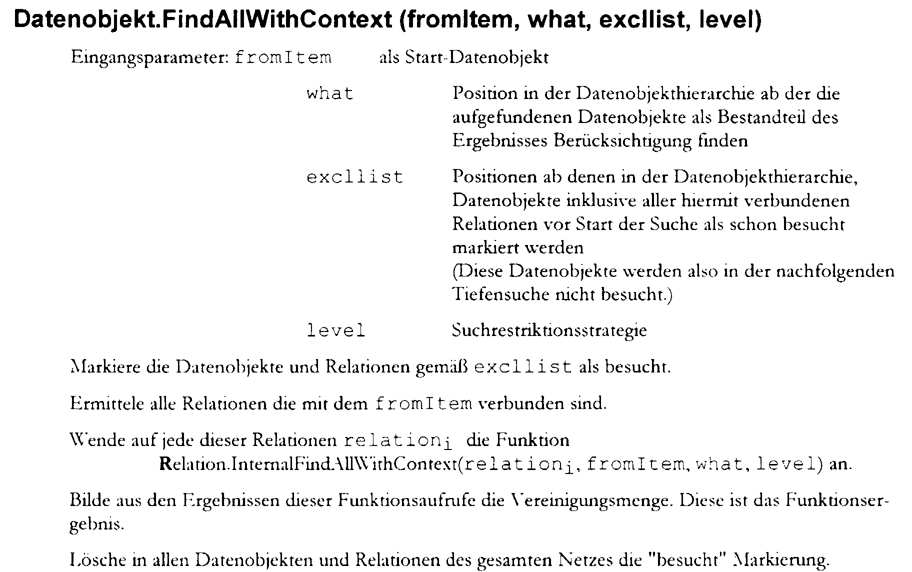

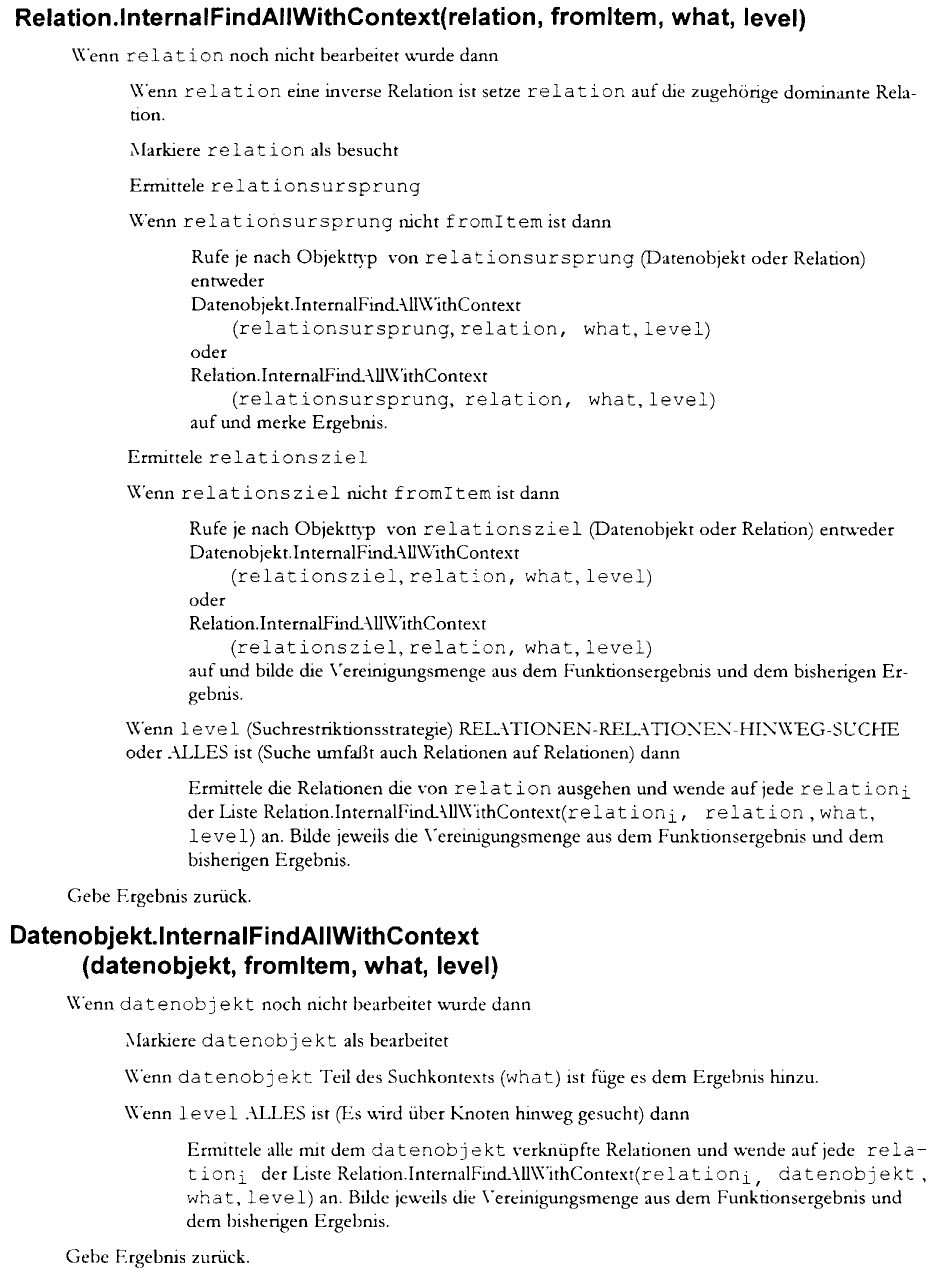

Eine weitere besonders bevorzugte Ausführungsform eines Computersystem nach der vorliegenden Erfindung ist dadurch gekennzeichnet, daß je Relation bzw. Relationen-Relation auch jeweils eine Hierarchieinformation explizit oder auch implizit vorhanden ist, welche angibt, auf welcher Position der Hierarchieebene die Relation bzw. Relationen-Relation in einer Relationenhierarchie steht.

Die Hierarchieinformationen über die Datenobjekte oder Relationen können etwa explizit über ein jeweils zugeordnetes Datenfeld im Speicher abgelegt sein. Eine mögliche Alternative besteht aber auch darin, daß die Datenobjekte oder Relationen in einer festen Hierarchie zueinander stehen oder aber, daß eine getrennt von dem eigentlichen semantischen Netz hinterlegte Hierarchiedatenstruktur vorhanden ist, die es erlaubt im konkreten Fall jeweils die Hierarchieposition eines Datenobjektes oder einer Relation zu ermitteln. Es sind jedoch darüberhinaus auch noch weitere Möglichkeiten vorstellbar.

Auf einem solchen Computersystem kann ein weiteres erfindungsgemäßes Verfahren zur Durchführung gelangen, das zur Ermittlung aller Relationen, die von einem Element einer Ursprungsmenge (Relation oder Datenobjekt) zu einem Element einer Zielmenge (Relation oder Datenobjekt) führen, wobei als Einschränkung nur die Relationen ab einer bestimmten Position in der Relationenhierarchie berücksichtigt werden und die Ursprungsmenge bzw. die Zielmenge dabei entweder ein einzelnes Datenobjekt oder eine einzelne Relation oder alle Datenobjekte ab einer bestimmten Position in der Datenobjekthierarchie oder alle Relationen ab einer bestimmten Position in der Relationenhierarchie oder alle Datenobjekte und Relationen des sematischen Netzes oder eine rekursive Spezifikation einer Menge von Relationen, die sich durch Anwendung des hier verwendeten Verfahrens ergibt als Elemente enthalten kann.

Beispielhaft sei auch hier ein bevorzugtes Ausführungsbeispiel dieses weiteren vorstehenden Verfahrens nach der vorliegenden Erfindung, ebenfalls notiert in Pseudocodedarstellung angegeben:

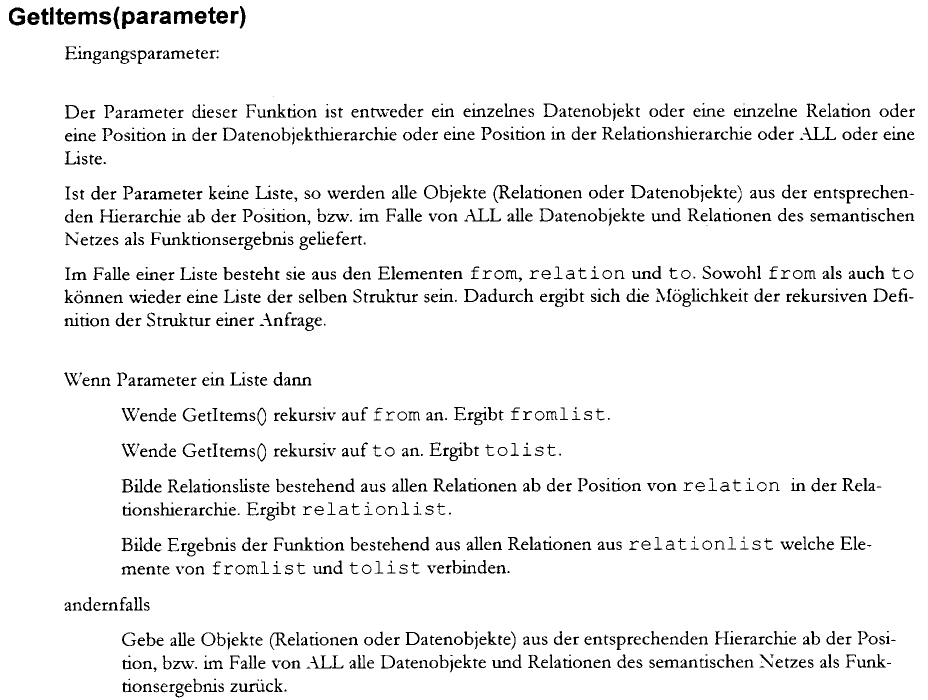

Zweckmäßigerweise werden noch Hilfsfunktionen, wie solche zur Erzeugung, zum Löschen, zum Umbennen und zum Auffinden von Netzwerkobjekten unter ihrem Namen zur Verfügung gestellt. Deren Realisierung ist jedoch recht einfach und bedarf daher hier keiner weiteren Erwähnung.

Desweiteren bietet sich ein objektorientierter Ansatz zur Realisierung der erfindungsgemäßen Systeme und Verfahren an. So erscheint beispielsweise eine Realisierung unter Verwendung der Programmiersprache KappaProTalk als besonders vorteilhaft.

Die erfindungsgemäßen Verfahren auf den entsprechenden erfindungsgemäßen Computersystemen können dabei mit zur Sicherheitsanalyse technischer Systeme, vorzugsweise der Gefahrenanalyse, Fehlermöglichkeits-, Fehlerauswirkungs- und Fehlerrelevanzanalyse in solchen technischen Systemen, wie etwa Raktensystemen, chemischen Anlagen, Flugzeugen und dergleichen mehr verwendet werden.

Wie technische Sicherheitsanalysesysteme sich von ihrer Funktionalität her darstellen, ist in FRISCH et al. (Frisch, B., Preyssl, C., Stolle, F., Propabilistic Safety Analysis using ERES, the ESA RAMS Expert System, Proceedings of ESA 1996 Product Assurance Symposium and Software Products Assurance Workshop, ESA/ ESTEC, Nordwijj, Niederlande 1996) beschrieben. Auf die informationstechnische Problematik der rechnerinternen Realisierung durch eine vorteilhafte Speicherorganisation und die hierzu gehörigen Verarbeitungsverfahren wird jedoch in dieser Publikation, welche hiermit ausdrücklich in ihrem Offenbarungsgehalt miteinbezogen wird nicht eingegangen.

Hier hat es sich überraschenderweise erwiesen, daß es mit Hilfe der vorgestellten erfindungsgemäßen Ausgestaltung semantischer Netze möglich ist, technische Systeme entsprechend ihrer, für eine Sicherheitsanalyse notwendigen Aspekte informationstechnisch besonders vorteilhaft, d.h. insbesondere speicherplatzsparend, zu modellieren und auch mit Hilfe der erfindungsgemäßen, hier vorgestellten Verfahren besonders effizient zu verarbeiten.

Die Datenobjekte in einem nach der vorliegenden Erfindung strukturierten Speicher können dabei vorzugsweise Objekte wie
Gefahren, generische Gefahren, Systemelemente, Funktionen, Phasen, Zonen, Szenarien, auslösende Ereignisse, unerwünschte Effekte, Folgen, Folgen auf Systemebene, generische Folgen, Kategorie des Grades der Auswirkungen, Reaktionszeiten, beobachtbare Symptome, Propagierung, Propagierungszeiten von Szenarien, Propagierungs Typen, Dauer,
   sein.

Als Relationen werden in derartigen Sytemen vorzugsweise etwa Relationen wie
Systemelement weist eine Gefahr auf, Funktion weist eine Gefahr auf, Systemelement hat als auslösendes Ereignis, Funktion hat als auslösendes Ereignis, Gefahr hat als auslösendes Ereignis, führt zu unerwünschtem Ereignis, hat zur Folge, hat als ein beobachtbares Symptom, hat als Reaktionszeit, hat als Kategorie des Grades der Auswirkungen, wird mittels Propagierung übertragen, hat als Propagierungs Typ, hat als Szenario Propagierungszeit, Szenario weist als Systemelementfunktion auf, Szenario weist als Systemelement auf und Szenario weist als Gefahr auf
   verwendet. Insbesondere hat sich der Ansatz auch Relationen-Relationen entsprechend der vorliegenden Erfindung zu verwenden im Hinblick auf die hier in Rede stehenden Sicherheitsanalysesysteme als besonders fruchtbar erwiesen. Diese Relationen-Relationen erlauben Modelle mit n-dimensionalen Matrizen, vorzugsweise solche mit vier Dimensionen. Insgesamt gesehen reduzieret die Verwendung von Relationen-Relationen die Anzahl der zur informationstechnischen Modellierung des technischen Systems nötigen Relationen und optimiert den "Pathtracking-" und "Backtracking"-Aufwand der in derartigen Sicherheitsanalysesystemen verwendeten Verfahren nach der vorliegenden Erfindung.

Als Relationen-Relationen werden dabei vorzugsweise folgende Relationen verwendet;
wird verwendet in Phase, rührt her von, ist in Zone und führt zu.

Auch ist eine Verwendung zur Durchführung von Risikoanalysen im Falle von Versicherungsrisiken vorgesehen. Insbesondere gilt dies für solche Riskikoanalysen, die die Versicherung technisch komplexer Systeme betreffen. Hier werden dann bestimmten Schadensszenarien Eintrittswahrscheinlichkeiten und entsprechende kommerzielle Parameter, wie etwa die Kosten solcher möglicher Schäden zugeordnet, was eine technisch gestützte Analyse des kommerziellen Risikos ermöglicht.

Auch kann ein System nach der vorliegenden Erfindung zur Modellierung und Analyse von Geschäftsprozessen eingesetzt werden.

Im folgenden werden nicht einschränkend zu verstehende Ausführungsbeispiele anhand der Zeichnung besprochen. In dieser zeigen;
- Fig. 1: ein semantisches Netwerk, daß von den erfindungsgemäßen Relationen-Relationen Gebrauch macht,
- Fig. 2: das semantische Netzwerk entsprechend Fig. 1 ohne die erfindungsgemäßen Relationen-Relationen,
- Fig. 3: eine schematische Darstellung der Funktionsweise des Verfahrens zur Ermittlung der mit einem Datenobjekt direkt und indirekt verbundenen Relationen und Datenobjekte in einer Ausführungsform in der keine Suchrestriktion vorgesehen ist,
- Fig. 4: eine schematische Darstellung der Funktionsweise des Verfahrens zur Ermittlung der mit einem Datenobjekt direkt und indirekt verbundenen Relationen und Datenobjekte in einer Ausführungsform, in der eine Suchrestriktion während der Tiefensuche in dem sematischen Netzwerk vorgesehen ist, die so ausgestaltet ist, daß Relationen die von Relationen ausgehen nicht weiter in der Tiefensuche verfolgt werden,
- Fig. 5: eine schematische Darstellung der Funktionsweise des Verfahrens zur Ermittlung der mit einem Datenobjekt direkt und indirekt verbundenen Relationen und Datenobjekte in einer Ausführungsform, in der eine Suchrestriktion während der Tiefensuche in dem sematischen Netzwerk vorgesehen ist, die so ausgestaltet ist, daß Relationen die von Relationen ausgehen nicht weiter in der Tiefensuche verfolgt werden und darüberhinaus nicht über Knoten hinweggesucht wird,
- Fig. 6: eine schematische Darstellung eines nach der vorliegenden Erfindung organisierten Speichers in Form eines sematischen Netzes mit Relationen-Relationen zur Verwendung in einem technischen Sicherheitsanalysesystem, und
- Fig. 7 bis Fig. 21: schematische Darstellungen von nach der vorliegenden Erfindung organisierten Computersystemen mit Speicher für sematische Netze zur näheren Erläuterung der Verwendung der erfindungsgemäßen Computersysteme und Verfahren zum Zwecke der Risikoanalyse von Versicherungsrisiken, insbesondere technischen Versicherungsrisiken, d.h. solchen Versicherungsrisiken, die sich aus der Versicherung technischer Anlagen, Maschinen, Geräte, Prozesse, Verfahrensweisen etc. ergeben, im einzelnen zeigen hierbei

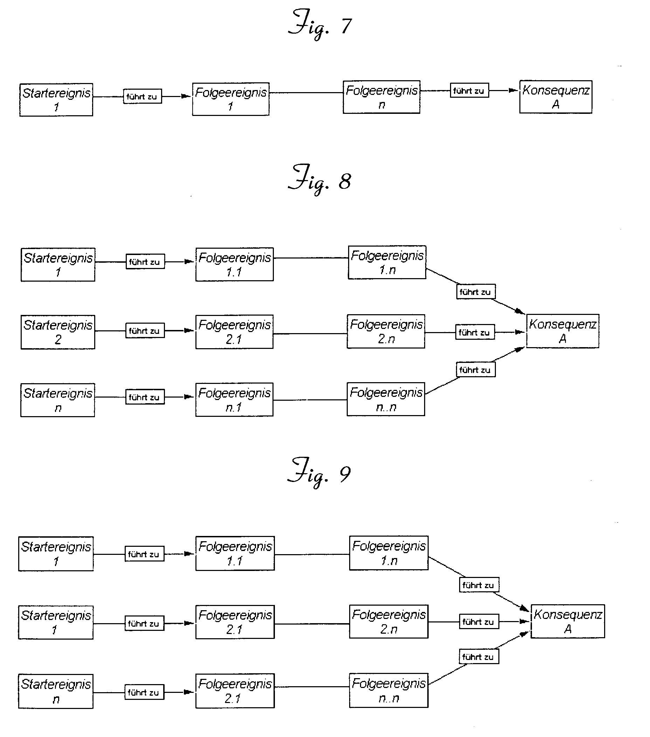

- Fig. 7: einen Ereignispfad,
- Fig. 8: einen Konsequenz Baum,
- Fig. 9: eine Darstellung im Konsequenz-Baum, in der ein Startereignis 1 und ein Folgeereignis 2.1 in mehreren Szenarien verwendet werden,

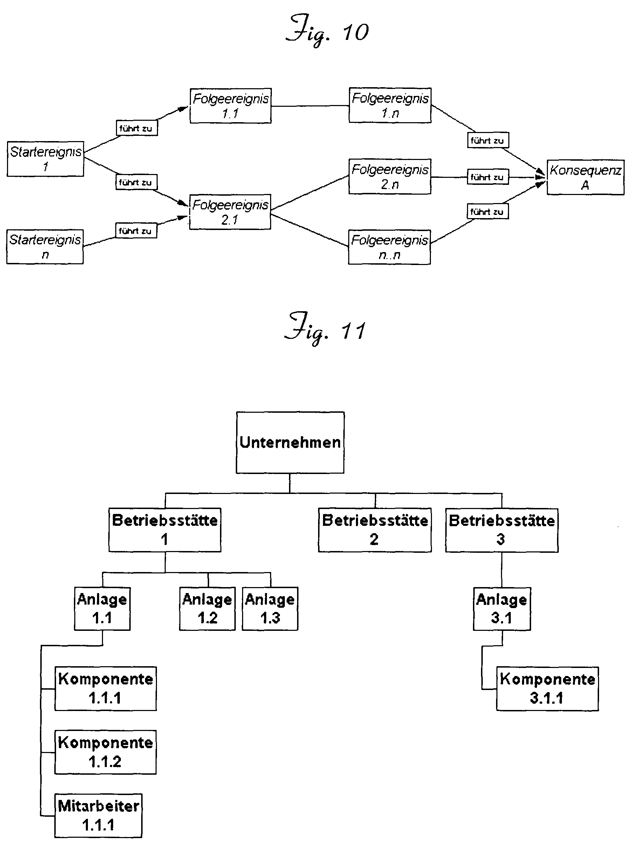

- Fig.10: eine Darstellung im Konsequenz-Baum, in der ein Startereignis 1 und ein Folgeereignis 2.1 in mehreren Szenarien verwendet werden, wobei die Darstellung redundanzfrei im Modell erfolgt,
- Fig.11: einen kompositorischen Aufbau eines Unternehmens (nach technischen Einheiten gegliedert) als Teil der Systembeschreibung,

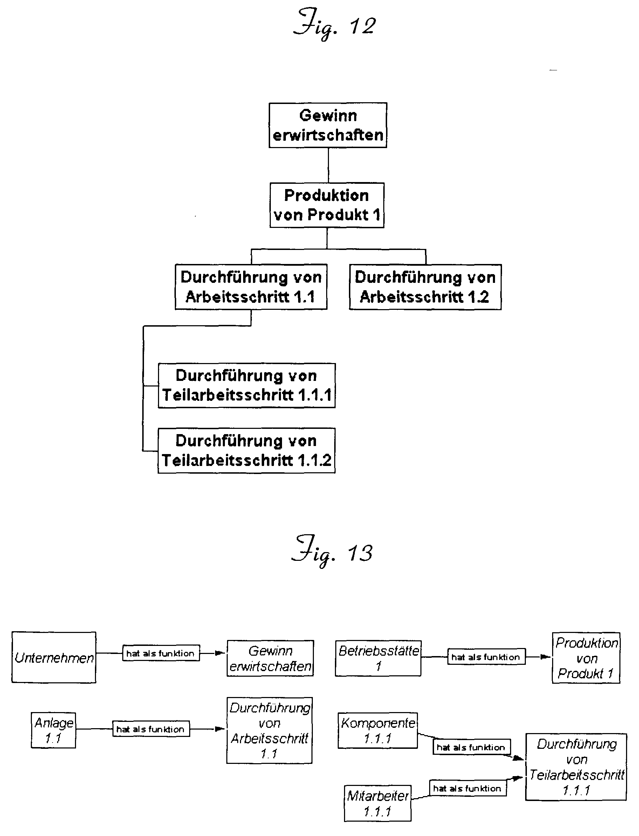

- Fig.12: einen kompositorischen Aufbau der Funktion eines Unternehmens (auf technischen Funktionen zurückgeführt) als Teil der Systembeschreibung,
- Fig.13: eine Zuordnung von Funktionen zu Systemelementen,

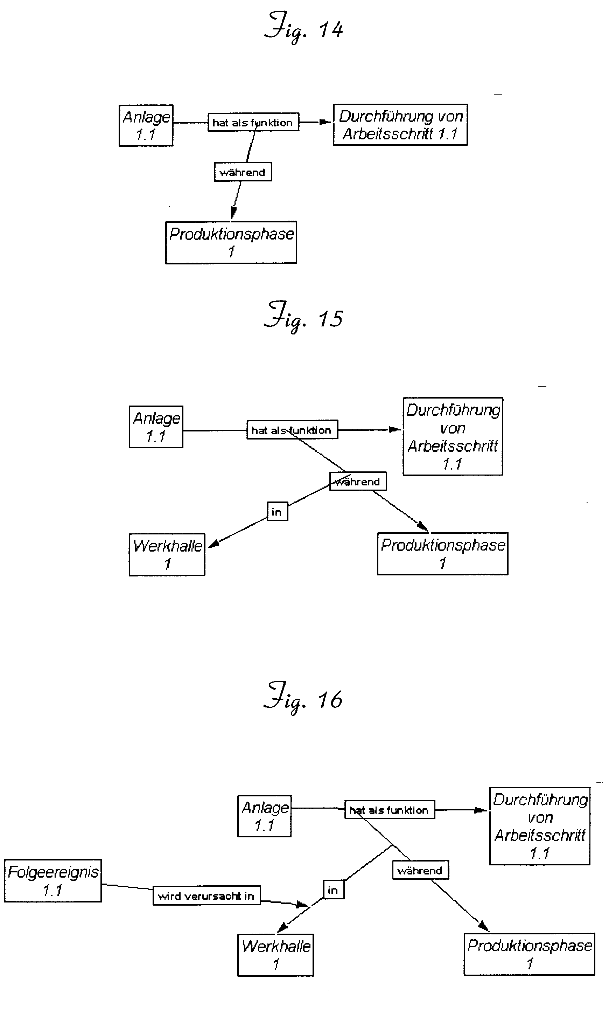

- Fig.14: eine Zuordnung einer Zeitphase zu Systemelement und Funktion,
- Fig.15: eine Zuordnung eines Ortes zu Systemelement, Funktion und Zeitphase,
- Fig.16: eine Verbindung zwischen deterministischen Modell (Folgeereignis 1.1) und Systembeschreibung,

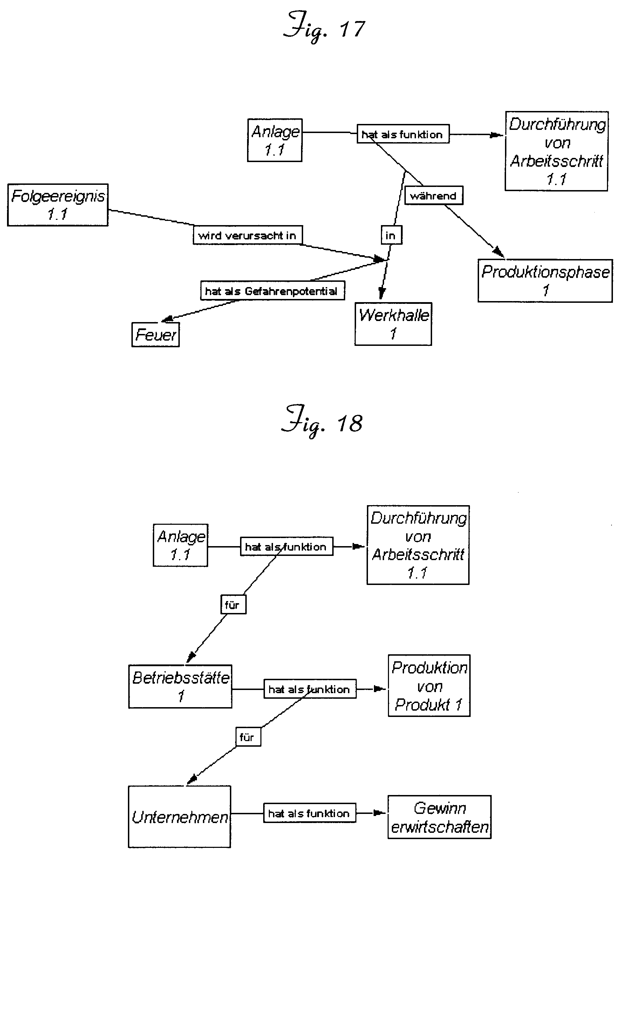

- Fig.17: eine Verbindung zwischen deterministischem Modell (Feuer) und Systembeschreibung,
- Fig.18: funktionale Abhängigkeiten entlang des kompositorischen Aufbaus,

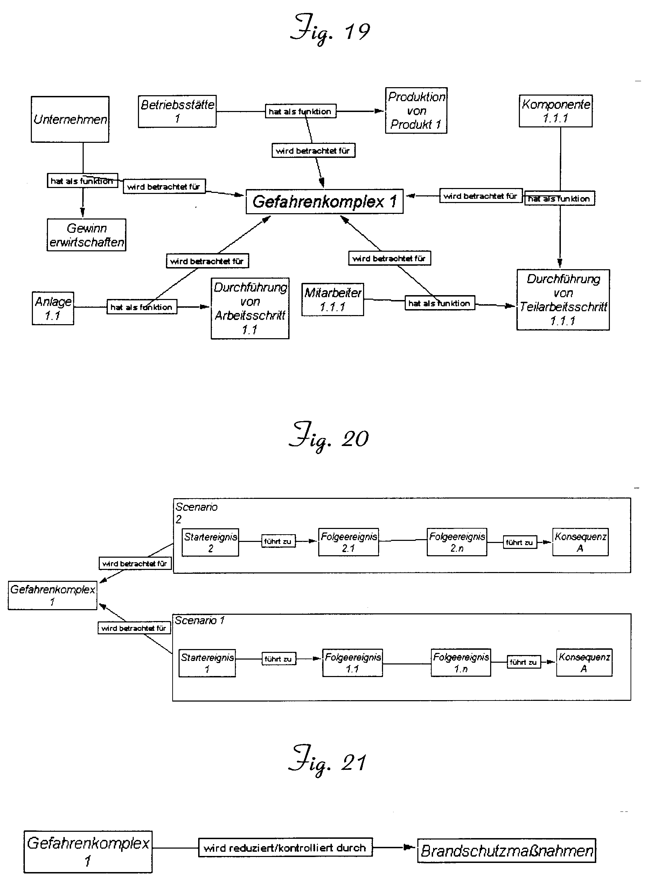

- Fig.19: eine Zusammenfassung von Teilen des Modells zur Systembeschreibung zu einem Gefahrenkomplex,
- Fig.20: eine Zuordnung von Szenarien zu einem Gefahrenkomplex, und
- Fig.21: eine Reduzierung bzw. Kontrolle eines Gefahrenkomplexes durch eine risikovermindernde/ risikovermeidende Maßnahme.

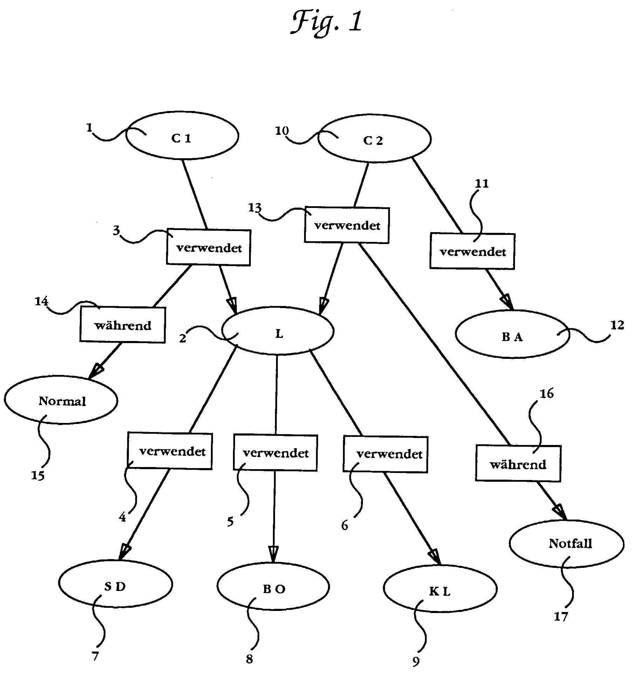

Fig. 1 zeigt ein semantisches Netwerk, daß von den erfindungsgemäßen Relationen-Relationen Gebrauch macht. Datenobjekte sind hier rundlich, Relationen jedoch rechteckig und mit Pfeilen dargestellt. Es ist ein Teil eines eines Raketensystems gegeben, worin ein erstes Computersystem **1** enthalten ist, welches im Normalbetrieb des Raketensystems bestimmte Funktionen erfüllt und sich hierbei eines Lagekontrollsystems **2** bedient. Es besteht somit eine Relation "verwendet" **3** zwischen dem ersten Computer **1** und dem Lagekontrollsystem **2**. Vom Lagekontrollsystem **2** führen drei weitere Relationen "verwendet" **4, 5** und **6** zu Subsystemen wie Steuerdüsen **7**, Boostern **8** und Klappen **9**, die zur Funktion des Lagekontrollsystems **2** erforderlich sind. Desweiteren existiert ein zweites Computersystem **10**, welches nicht-kritische Aufgaben des Raketensystems, etwa eine wünschenswerte, aber nicht zwingend notwendige Bildauswertung übernimmt. Eine weitere Relation "verwendet" **11** führt daher vom zweiten Computersystem **10** zum Bildauswertesystem **12**. Im dem Notfalle, daß das erste Computersystem ausfällt, springt das zweite Computersystem, welches im Normalbetrieb nur unkritische Aufgaben wahrnimmt als Reservesystem für das erste Computersystem ein und übernimmt dessen Aufgaben. Somit übernimmt es dann auch die Ansteuerung des Lagekontrollsystems. Daher führt wiederum eine weitere Relation "verwendet" **13** vom zweiten Computersystem **10** zum Lagekontrollsystem **2**. Der Sachverhalt, daß das erste Computersystem **1** das Lagekontrollsystem **2** während des Normalbetriebes und das zweite Computersystem **10** das Lagekontrollsystem **2** während des Notfalls ansteuert wird hier nun jeweils mittels einer Relationen-Relation modelliert. Eine erste Relationen Relation "während" **14** führt von der Relation "verwendet" **3** zu dem Datenobjekt "Normal" **15**. Auf der anderen Seite führt eine zweite Relationen Relation "während" **16** von der Relation "verwendet" **13** zu dem Datenobjekt "Notfall" **17**.

Fig. 2 das semantische Netzwerk entsprechend Fig. 1 ohne die erfindungsgemäßen Relationen-Relationen. Will man die Informationen nach dem Sachverhalt aus Fig. 1 in einem Speicher hinterlegen, der seiner Struktur nach einem herkömmlichen semantischen Netz entspricht, so muß man das Lagekontrollsystem **2** mittels je einer "hat"-Relatio**n 20, 21** künstlich aufteilen, indem man künstlich ein Lagekontrollsystem für den Normalbetrieb **18** und eines für den Notbetrieb **19** als Datenobjekt speichert und eine "verwendet"-Relation **3** vom ersten Computersystem **1** auf das Lagekontrollsystem für Normalbetrieb **18** und eine weitere "verwendet"-Relation **13** vom zweiten Computersystem **10** auf das Lagekontrollsystem für Notbetrieb **19** im Speicher vermerkt, obgleich es sich um dasselbe Lagekontrollsystem **2** handelt. Diese künstliche Aufsplittung ist erforderlich um in dem nach den Strukturen eines herkömmlichen semantischen Netzes aufgebauten Speicher alle relevanten Informationen, insbesondere die Information darüber in welcher Phase, nämlich Normalbetrieb oder Notbetrieb, welches Computersystem, nämlich das erste **1** oder das zweite **10** das Lagekontrollsystem **2** ansteuert. Es ist also notwendig das Lagekontrollsystem **2** in zwei Untersysteme für jede relevante Phase **18, 19** aufzusplitten und zu diesem Zwecke zu duplizieren. Ebenso müssen natürlich auch die vom Lagekontrollsystem **2** verwendeten Subsysteme **22, 23** auch je einmal für beide künstlich geschaffenen Lagekontrollsysteme abgespeichert werden, somit auch deren evtl. Sub-Subsysteme und so fort. Dies führt zu einer enormen Speicherplatzaufblähung schon in einfachen Fällen, was in der Praxis zur Folge hat, das derartige Verhältnisse, zumindest was komplexere Systemstrukturen anbelangt nicht mehr implementierbar sind. Dies gilt nicht nur im Hinblick auf den Speicherplatzbedarf, sondern auch im Hinblick auf die Erstellung, Pflege und Überblickbarkeit des im Einzelfall konkret verwendeten Datenmodells.

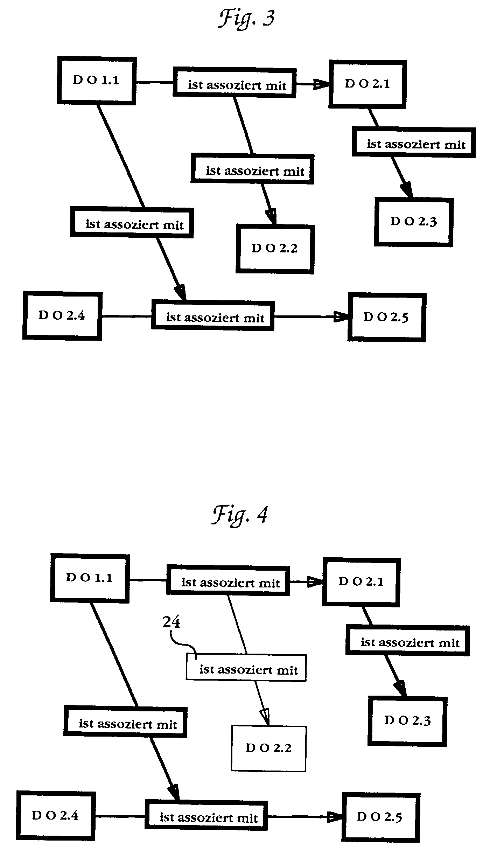

Fig. 3 zeigt eine schematische Darstellung der Funktionsweise des Verfahrens zur Ermittlung der mit einem Datenobjekt direkt und indirekt verbundenen Relationen und Datenobjekte in einer Ausführungsform in der keine Suchrestriktion vorgesehen ist. Daher sind hier alle Suchpfade entlang von Datenobjekten und Relationen mit einem dickeren Rand versehen, was symbolisiert, daß sie alle besucht wurden.

Fig. 4 zeigt eine schematische Darstellung der Funktionsweise des Verfahrens zur Ermittlung der mit einem Datenobjekt direkt und indirekt verbundenen Relationen und Datenobjekte in einer Ausführungsform, in der eine Suchrestriktion während der Tiefensuche in dem sematischen Netzwerk vorgesehen ist, die so ausgestaltet ist, daß Relationen die von Relationen ausgehen nicht weiter in der Tiefensuche verfolgt werden. Hier wurde somit die Suche über die Relationen-Relation "ist assoziert mit" **24** hinweg nicht weiterverfolgt. Auch hier sind alle Suchpfade, die nach diesem Verfahren besucht wurden entlang von Datenobjekten und Relationen mit einem dickeren Rand versehen, im Gegensatz zu denen die nicht besucht wurden und einen dünneren Rand aufweisen.

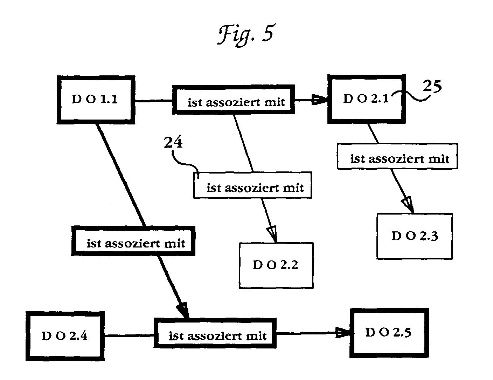

Fig. 5 zeigt eine schematische Darstellung der Funktionsweise des Verfahrens wie in Fig. 4 zur Ermittlung der mit einem Datenobjekt direkt und indirekt verbundenen Relationen und Datenobjekte in einer Ausführungsform, in der zusätzlich eine Suchrestriktion während der Tiefensuche in dem sematischen Netzwerk vorgesehen ist, die so ausgestaltet ist, daß Relationen die von Relationen ausgehen nicht weiter in der Tiefensuche verfolgt werden.Hier wurde daher die Suche über die Relationen-Relation "ist assoziert mit" **2**4 und das Datenobjekt **25** hinweg die Suche nicht weiterverfolgt. Auch hier sind alle Suchpfade, die nach diesem Verfahren besucht wurden, entlang von Datenobjekten und Relationen mit einem dickeren Rand versehen, im Gegensatz zu denen die nicht besucht wurden und einen dünneren Rand aufweisen.

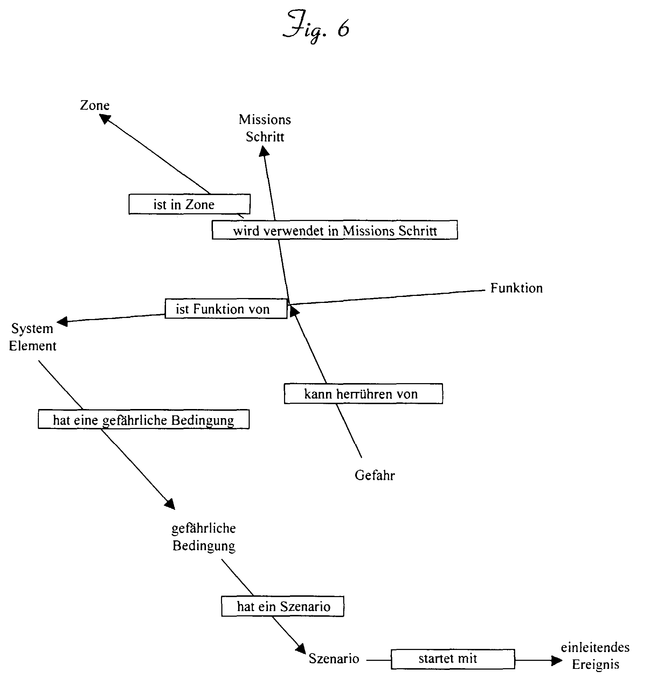

Fig. 6 zeigt eine schematische Darstellung eines nach der vorliegenden Erfindung organisierten Speichers in Form eines sematischen Netzes mit Relationen-Relationen zur Verwendung in einem technischen Sicherheitsanalysesystem. Die Datenobjekte sind hier ohne und die Relationen mit einer rechteckigen Umrandung dargestellt.

Fig. 7 bis Fig. 21 zeigen schematische Darstellungen von nach der vorliegenden Erfindung organisierten Computersystemen mit Speicher für sematische Netze zur näheren Erläuterung der Verwendung der erfindungsgemäßen Computersysteme und Verfahren zum Zwecke der Risikoanalyse von Versicherungsrisiken, insbesondere technischen Versicherungsrisiken, d.h. solchen Versicherungsrisiken, die sich aus der Versicherung technischer Anlagen, Maschinen, Geräte, Prozesse, Verfahrensweisen etc. ergeben.

Für die Versicherung industrieller, insbesondere technischer Risiken erstellen Versicherer oder Maklerunternehmen umfangreiche Risikoanalysen zur Ermittlung der zu versichernden Risiken und der Versicherungsprämien. Die Versicherung ist bestrebt, die Versicherungsnehmer nach vergleichbaren Klassen zu gruppieren, um die mathematischen Gesetze der Wahrscheinlichkeitsrechnung anwenden zu können. Diese Klassifizierung gestaltet sich bei industriellen und insbesondere technischen Risiken besonders schwierig durch
die fehlende Gleichartigkeit der Risiken,
die fehlende Anzahl gleichartiger Risiken und
den unterschiedlichen Bedarf der Unternehmen.

Risiko sei hier die Eintrittswahrscheinlichkeit eines Ereignisses multipliziert mit der Schwere der Auswirkungen.

Die Risikoanalyse basiert auf zwei Modellen, dem deterministischen Modell realisiert mit einem Objekt-Relationen Modell und dem probabilistischen Modell, welches das Verfahren der Monte-Carlo Simulation auf dem deterministischen Modell ausführt.

Das deterministische Modell besteht aus Szenarien, die jeweils genau einen Ereignispfad beinhalten. Jeder Ereignispfad beginnt mit einem unabhängigen Startereignis. Das Startereignis führt genau zu einem Folgeereignis. Ein Folgeereignis kann wieder zu einem weiteren Folgeereignis führen usw. Das letzte Ereignis des Ereignispfades ist eine Konsequenz (siehe Fig. 7).

In der Objekthierarchie des deterministischen Modells gibt es jeweils eine Klasse für Startereignisse, Folgeereignisse und Konsequenzen. Konsequenzen werden im Szenario als Klassen benutzt. D.h., beim Aufbau des Modells werden zunächst alle Konsequenz-Klassen definiert. Konsequenz-Klassen könnten z.B. sein *"*Verlust von Menschenleben*"*, *"*Schwere Verletzungen*"* , *"*Produktionsstillstand*"* o.ä.. In den Szenarien wird immer eine Konsequenz-Klasse verwendet, d.h. alle Szenarien die zu dieser Konsequenz-Klasse führen, tragen zum Risiko dieser Konsequenz bei. Alle Szenarien, die zu einer Konsequenz führen werden auch als Konsequenz-Baum bezeichnet (siehe Fig. 8).

Startereignisse und Folgeereignisse können auch in mehreren Szenarien verwendet werden (Verzweigungen). Dies führt zu einer alternativen Darstellungen des Modells (siehe Fig. 9 und Fig.10).

Alle Ereignisse werden nun mit Komponenten aus der Systembeschreibung verbunden. Die Systembeschreibung ist ein unabhängiger Teil des deterministischen Modells, der die zu versichernde Sache oder den zu versichernden Sachverhalt abbildet. Das Objekt-Relationen Modell der Systembeschreibung besteht zunächst aus dem kompositorischen Aufbau (siehe Fig.11).

Ein weiterer Bestandteil der Systembeschreibung ist der kompositorische Aufbau der Funktionen. Funktionen werden so definiert, daß sie später den Systemelementen zugeordnet werden können. Die Tiefe der Strukturierung sollte für Systemelemente und Funktionen kompatibel sein. Dies bedeutet ein Sub- Sub-Element eine entsprechende Sub- Sub-Funktion gegenüberstehen (siehe Fig.12). Die Objekte beider Teilmodelle werden jetzt mit einer 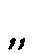 hat_als_funktion*"*-Relation verbunden (siehe Fig.13). Das Modell der Systembeschreibung kann um Angaben über Zeit und Ort ergänzt werden (siehe Fig.14 und Fig.15). Zeit bezieht sich hier auf einen bestimmten Zeitraum. Diese Angaben sind nur dann sinnvoll, wenn sie für die Gliederung des Gesamtmodells benötigt werden.

Bei komplexen Anlagen und Produktionsprozessen können z.B. nur einzelne Produktionsphasen oder einzelne Produktionsstätten untersucht werden. Bei der Auswertung des Modells könnte aber eine Fortpflanzung in die nachfolgende Produktionsphase, bzw. die Ausbreitung in benachbarte Produktionstätten berücksichtigt werden.

Das deterministische Modell und das Modell der Systembeschreibung können über eine Zuordnung von Ereignissen zu einem Teilnetz bestehend aus Systemelement, Funktion, Zeitraum (optional) und Ort (optional) verbunden werden (siehe Fig.16).

Für die Anwendung bei einer Versicherung wird diese Relation benutzt, um eine Risikoanalyse aus einer Systembeschreibung zu generieren. Zu diesem Zweck werden alle verfügbaren Risikoanalysen aus der Vergangenheit in das hier beschriebene deterministische Modell und in die Systembeschreibung zerlegt und in einer Wissensbasis abgelegt. Anschliessend kann für eine neue Risikoanalyse eine Systembeschreibung aus den bereits abgelegten Komponenten zusammengesetzt werden und mit dieser Systembeschreibung können die relevanten Ereignispfade aus der Wissensbasis herausgesucht werden. Bei diesem Suchvorgang können z.B. komplexe Zusammenhänge wie physikalische Propagation (d.h. Ausbreitung eines Ereignisses von einem Ort zum Nächsten) oder funktionale Propagation (d.h. entlang funktionaler Abhängigkeiten siehe Fig.18) berücksichtigt werden.

Für eine gezielte Abgrenzung von Versicherungsarten können der Systembeschreibung auch Gefahrenpotentiale zugeordnet werden (siehe Fig.17). Für eine Feuerversicherung z.B. werden dann nur die Ereignispfade berücksichtigt, in denen Ereignisse vorkommen, deren Systemelemente das Gefahrenpotential Feuer in sich tragen. Umgekehrt gibt es auch die Möglichkeit alle Systemelemente mit einem Gefahrenpotential zu verbinden, die gegen die Freisetzung dieses Gefahrenpotentials empfindlich sind (in diesem Falle also brennbar).

Für eine gezielte Suche nach Ereignispfaden bei sehr komplexen Anlagenbeschreibungen ist es sinnvoll die Systemelemente die man für eine Teilanalyse zusammenfassen möchte in einem Gefahrenkomplex zusammenzufassen. Ein Gefahrenkomplex kann eine Beliebige Ausswahl von Systemelementen enthalten (Fig.19), er kann aber auch alle Systemelemente einer Zeitphase oder eines Ortes zusammenfassen. Alle Ereignispfade werden jeweils als Szenario zusammengefasst und jeweils einem Gefahrenkomplex zugeordnet (siehe Fig.20). Somit ergibt sich eine Strukturierung in der Systembeschreibung und im deterministischen Modell.

Auf dem deterministischen Modell kann nun eine probabilistische Risikoanalyse durchgeführt werden. Im Rahmen der Risikoanalyse wird die Eintrittswahrscheinlichkeit jedes Ereignisses geschätzt oder durch statistische Verfahren ermittelt. Es können auch statistische Verteilungsfunktionen definiert werden. Für die Berechnung des Gesamtrisikos werden zunächst die Szenarien die jeweils zu einer Konsequenz-Klasse gehören ausgefiltert. Szenarien mit verschiedenen Konsequenzen dürfen auf keinen Fall gemischt werden, da ein Szenario daß zu der Konsequenz 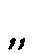 Verlust von Menschenleben*"* führt andere Versicherungstechnische Folgen hat, als ein Szenario, daß zu der Konsequenz 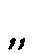 Vernichtung von Sachwerten*"* führt.

Zusätzlich besteht auch die Möglichkeit nur die Szenarien bestimmter Gefahrenkomplexe zu untersuchen, z.B. eines bestimmten Ortes (z.B. eine bestimmte Werkhalle).

Für die Berechnung des Risikos wird eine Monte-Carlo Simulation auf das Modell der Ereignispfade angewendet. Dabei werden die Eintrittswahrscheinlichkeiten entlang der Ereignispfade multipliziert. Dieses Produkt ergibt die Eintrittswahrscheinlichkeit des Szenarios. Die Eintrittswahrscheinlichkeiten aller Szenarien werden anschliessend addiert. Dies ergibt die Gesamteintrittswahrscheinlichkeit der gewählten Konsequenz. Die Ergebnisse dieser Berechnungen können im deterministischen Modell gespeichert werden und führen zu einem Ranking. Es können sowohl die Ereignisse, als auch Szenarien, als auch die Gefahrenkomplexe sortiert werden. Je nach mathematischen Verfahren kann neben der Eintrittswahrscheinlichkeit auch die Subjektivität und die Ungewissheit der Ergebnisse bewertet werden. Abschliessend besteht die Möglichkeit für Szenarien oder Gefahrenkomplexe risikomindernde oder risikovermeidende Maßnahmen zu defininieren (bei Feuer z.B. eine Sprinkleranlage in der Werkhalle) (siehe Fig.21). Solche Maßnahmen könnten auch direkt in die Ereignispfade eingearbeitet werden. Wird zum Beispiel eine Sprinkleranlage eingebaut, kommt als zusätzliches Ereignis der Ausfall / das Versagen der Sprinkleranlage hinzu. Da die Eintrittwahrscheinlichkeiten der Ereignisse eines Ereignispfades stets multipliziert werden, um die Gesamteintrittswahrscheinlichkeit des Ereignisfades (Szenario) zu berechnen ergibt sich z.B. bei einem Startereignis Kabelbrand mit einer Eintrittswahrscheinlichkeit von 0.0001 pro Jahr multipliziert mit einer Eintrittswahrscheinlichkeit von 0.0001 pro Jahr für den Ausfall der Sprinkleranlage eine Gesamtwahrscheinlichkeit, daß es zum Abbrennen der Werkhalle kommt von 0.02 x 0.0001 = 0.000002 pro Jahr, d.h. ein Schaden in 500000 Jahren statt ein Schaden in 50 Jahren ohne Sprinkleranlage.

## Patentansprüche

1. Computersystem mit mindestens einem Speicher, der zumindest teilweise nach Art eines semantischen Netzes organisiert ist, wobei er Speicherplätze aufweist für
Datenobjekte (**1, 7-10, 12, 18, 19, 15**) und
für Relationen (**3-6, 11, 13, 20, 21**) wobei je Relation (**3-6, 11, 13, 20, 21**) mindestens jeweils die Information explizit oder auch implizit vorhanden ist, welche angibt, zwischen welchen jeweiligen Datenobjekten (**1, 7-10, 12, 18, 19, 15**) die Relation (**3-6, 11, 13, 20, 21**) besteht,
**dadurch gekennzeichnet, daß**
desweiteren Speicherplatz für weitere Relationen, welche Relationen-Relationen (**14, 16, 24**) genannt werden, vorgesehen ist, wobei
je Relationen-Relationen (**14, 16, 24**) mindestens jeweils die Information explizit oder auch implizit vorhanden ist, welche angibt
zwischen welchem jeweiligen Datenobjekt und welcher jeweiligen Relation,
oder
zwischen welcher jeweiligen Relation und welcher weiteren jeweiligen Relation die Relationen-Relation besteht,
wobei auch Relationen-Relationen zwischen Relationen-Relationen bzw. zwischen Relationen-Relationen und Datenobjekten bestehen können.

2. Computersystem nach Anspruch 1, dadurch gekennzeichnet, daß je Relation (**3-6, 11, 13, 20, 21**) oder Relationen-Relationen (**14, 16, 24**) auch jeweils die Information explizit oder auch implizit vorhanden ist, welche angibt, in welche Richtung die jeweilige Relation oder Relation-Relation besteht.

3. Computersystem nach Anspruch 2, dadurch gekennzeichnet, daß je gerichteter Relation oder gerichteter Relationen-Relation auch jeweils die Information explizit oder auch implizit vorhanden ist, welche angibt, ob die jeweilige Relation oder Relation-Relation eine dominante oder eine inverse Relation bzw. Relationen-Relation ist.

4. Computersystem nach Anspruch 1, 2 oder 3, dadurch gekennzeichnet, daß je Datenobjekt auch jeweils eine Hierarchienformation explizit oder auch implizit vorhanden ist, welche angibt, auf welcher Position der Hierarchieebene das Datenobjekt in einer Datenobjekthierarchie steht.

5. Computersystem nach Anspruch 1, 2, 3 oder 4, dadurch gekennzeichnet, daß je Relation bzw. Relationen-Relation auch jeweils eine Hierarchienformation explizit oder auch implizit vorhanden ist, welche angibt, auf welcher Position der Hierarchieebene die Relation bzw. Relationen-Relation in einer Relationenhierarchie steht.

6. Verfahren zur Durchführung auf einem Computersystem nach Anspruch 1 zur Ermittlung der mit einem Datenobjekt (**1, 7-10, 12, 18, 19, 1**5) direkt und indirekt verbundenen Relationen (**3-6, 11, 13, 20, 21,14, 16, 24**) und Datenobjekte (**1**, **7-10, 12, 18, 19, 15**), wobei das zu durchsuchende semantische Netzwerk ausgehend von einem Start-Datenobjekt entsprechend einer rekursiven Tiefensuche (depth-first-search-Verfahren) entlang der, während der Durchführung des Verfahrens aufgefunden Relationen und Datenobjekte durchsucht wird und die hierbei rekursiv aufgefundenen Relationen im Speicher in einer Ergebnisdatenstruktur, vorzugsweise einer Liste festgehalten werden,
**dadurch gekennzeichnet, daß**
auch entlang der in dem Netz aufgefundenen Relationen-Relationen (**14, 16, 24**) rekursiv weitergesucht wird.

7. Verfahren nach Anspruch 6 zur Durchführung auf einem Computersystem nach Anspruch 1, dadurch gekennzeichnet, daß während der Tiefensuche in dem sematischen Netzwerk eine Suchrestriktion vorgesehen ist, die entsprechend einer gewählten Strategie eine Einschränkung des Suchraumes vornimmt.

8. Verfahren nach Anspruch 7 zur Durchführung auf einem Computersystem nach Anspruch 1, dadurch gekennzeichnet, daß die Suchrestriktion so ausgestaltet ist, daß Relationen die von Relationen (**24**) ausgehen nicht weiter in der Tiefensuche verfolgt werden.

9. Verfahren nach Anspruch 8 zur Durchführung auf einem Computersystem nach Anspruch 1, dadurch gekennzeichnet, daß die Suchrestriktion zusätzlich so ausgestaltet ist, daß nicht über aufgefundene Datenobjekte (**25**) in die Tiefe hinweggesucht wird.

10. Verfahren nach Anspruch 8 oder 9 zur Durchführung auf einem Computersystem nach Anspruch 4, dadurch gekennzeichnet, daß die Suchrestriktion zusätzlich so ausgestaltet ist, daß Datenobjekte ab einer bestimmten vor Start der Suche festgelegten Positionen in der Datenobjekthierarchie, inklusive aller hiermit verbundenen Relationen nicht mit in die Suche einbezogen werden.

11. Verfahren nach Anspruch 6, 7, 8, 9 oder 10 zur Durchführung auf einem Computersystem nach Anspruch 4, dadurch gekennzeichnet, daß die während der Suche ermittelten Datenobjekte dahingehend restringiert werden, daß nur Datenobjekte ab einer bestimmten vor Start der Suche festgelegten Position in der Datenobjekthierarchie als Bestandteil des Ergebnisses der Suche berücksichtigt werden.

12. Verfahren zur Durchführung auf einem Computersystem nach Anspruch 5 zur Ermittlung aller Relationen (**3-6, 11, 13, 20, 21,14, 16, 24**), die von einem Element einer Ursprungsmenge (Relation (**3-6, 11, 13, 20, 21,14, 16, 24**) oder Datenobjekt (**1, 7-10, 12, 18, 19, 15**)) zu einem Element einer Zielmenge (Relation (**3**-**6, 11, 13, 20, 21,14, 16, 24**) oder Datenobjekt (**1, 7-10, 12, 18, 19, 15**)) führen, wobei als Einschränkung nur die Relationen ab einer bestimmten Position in der Relationenhierarchie berücksichtigt werden und die Ursprungsmenge bzw. die Zielmenge dabei entweder
ein einzelnes Datenobjekt, oder
eine einzelne Relation, oder
alle Datenobjekte ab einer bestimmten Position in der Datenobjekthierarchie, oder
alle Relationen ab einer bestimmten Position in der Relationenhierarchie,
oder
alle Datenobjekte und Relationen des sematischen Netzes, oder
eine rekursive Spezifikation einer Menge von Relationen, die sich durch Anwendung des hier verwendeten Verfahrens ergibt
als Elemente enthalten kann.

13. Verwendung eines Verfahrens nach Anspruch 6 zur Durchführung auf einem Computersystem nach Anspruch 1 zur Sicherheitsanalyse technischer Systeme, vorzugsweise der Gefahrenanalyse, Fehlermöglichkeits-, Fehlerauswirkungs- und Fehlerrelevanzanalyse in den technischen Systemen, vorzugsweise etwa Raktensystemen, chemischen Anlagen, Flugzeugen und dergleichen.

14. Verwendung eines Verfahrens nach Anspruch 12 zur Durchführung auf einem Computersystem nach Anspruch 5 zur Sicherheitsanalyse technischer Systeme, vorzugsweise der Gefahrenanalyse, Fehlermöglichkeits-, Fehlerauswirkungs- und Fehlerrelevanzanalyse in den technischen Systemen, vorzugsweise etwa Raktensystemen, chemischen Anlagen, Flugzeugen und dergleichen.

15. Verwendung eines Verfahrens nach Anspruch 6 zur Durchführung auf einem Computersystem nach Anspruch 1 zur Risikoanalyse von, vorzugsweise technischen, Versicherungsrisiken.

16. Verwendung eines Verfahrens nach Anspruch 12 zur Durchführung auf einem Computersystem nach Anspruch 5 zur Risikoanalyse von, vorzugsweise technischen, Versicherungsrisiken.

17. Verwendung eines Verfahrens nach Anspruch 6 zur Durchführung auf einem Computersystem nach Anspruch 1 zur Analyse von Geschäftsprozessen.

18. Verwendung eines Verfahrens nach Anspruch 12 zur Durchführung auf einem Computersystem nach Anspruch 5 zur Analyse von Geschäftsprozessen.
